# EUROPEAN PATENT SPECIFICATION

(11) **EP 3 392 480 B1**
(45) Date of publication and mention of the grant of the patent: **02.06.2021**
(21) Application number: 17167614.1
(22) Date of filing: 21.04.2017
(51) Int. Cl.: F01N 3/20, F01N 3/28

(54) **SYSTEM FOR MIXING A LIQUID SPRAY INTO A GASEOUS FLOW AND EXHAUST AFTERTREATMENT DEVICE COMPRISING SAME**
SYSTEM ZUM MISCHEN EINES FLÜSSIGEN SPRAYS IN EINEN GASFÖRMIGEN STROM UND ABGASNACHBEHANDLUNGSVORRICHTUNG DAMIT
SYSTÈME PERMETTANT DE MÉLANGER UN LIQUIDE PULVÉRISÉ DANS UN FLUX GAZEUX ET DISPOSITIF DE POST-TRAITEMENT D'ÉCHAPPEMENT LE COMPRENANT

(43) Date of publication of application: 24.10.2018
(73) Proprietor: Donaldson Company, Inc., Minneapolis, MN 55440-1299 (US)
(72) Inventor: DE RUDDER, Korneel, B-3020 Winksele (BE); SCHELLENS, Bart, B-3090 Overijse (BE); CHAUVIN, Corine, 14000 Caen (FR); SILVA, Francisco Jose Cardoso, B-3300 Tienen (BE)
(74) Representative: Beck, Michaël Andries T.

(56) References cited:
- WO-A1-2012/089290
- WO-A1-2015/130789
- DE-A1-102015 016 284
- US-A1- 2009 019 843
- US-A1- 2012 204 541

## Description

### Field of the Invention

The present invention pertains to the field of systems for mixing a liquid spray into a gaseous flow, in particular systems for mixing a spray of urea solution into an exhaust flow of an internal combustion engine for the purpose of selective catalytic reduction (SCR) of NOₓ residues.

### Background

Vehicles equipped with diesel engines typically include exhaust systems that have aftertreatment components such as selective catalytic reduction catalyst devices, lean NOₓ catalyst devices, or lean NOₓ trap devices to reduce the amount of undesirable gases, such as nitrogen oxides (NOₓ) in the exhaust. In order for these types of aftertreatment devices to work properly, a doser injects reactants, such as urea, ammonia, or hydrocarbons, into the exhaust gas. As the exhaust gas and reactants flow through the aftertreatment device, the exhaust gas and reactants convert the undesirable gases, such as NOₓ, into more acceptable gases, such as nitrogen, oxygen, or carbon dioxide, or into water. However, the efficiency of the aftertreatment system depends upon how evenly the reactants are mixed with the exhaust gases.

International patent application publication no. WO 2015/130789 A1 in the name of Donaldson Company, Inc., discloses an aftertreatment arrangement for treating exhaust including a main body defining an interior, an inlet opening, and an outlet; an inlet arrangement disposed at the inlet opening; an aftertreatment substrate disposed between the inlet opening and the outlet; a restrictor arrangement disposed between a first closed end of the main body interior and the aftertreatment substrate; and a dosing arrangement configured to inject reactant into the exhaust. In an example disclosed in WO 2015/130789 A1, a baffle plate defines a solid region aligned with the restricted passageway and defines openings at locations radially offset from the restricted passageway. In some particular examples, the baffle plate defines a plurality of scoops, pipes, louvers, or other direction adjusting members that facilitate swirling or other mixing movements of the exhaust.

WO2012/089290 A1 discloses a device for distributing fluids, in particular a water-urea mixture or a liquid fuel, in exhaust systems of an internal combustion engine comprises an injection device which issues into the exhaust tract in particular upstream of a so-called SCR catalytic converter. A combination of a multiplicity of individual measures is provided for attaining uniform mixing of the fluids with the exhaust gas and complete evaporation of the fluids in the exhaust gas. The individual measures include at least one swirl generating device and/or at least one mixing device, at least one catalytic converter and an injection nozzle of the injection device, the injection nozzle being arranged at a predefined distance from a wall of the exhaust tract.

US2009/0019843 A1 discloses an exhaust system for an internal combustion engine for a vehicle, comprising an exhaust passage for transporting exhaust gases from the engine; an injector coupled to a wall of the exhaust passage, the injector including an injection axis that is angled relative to a longitudinal axis of a mixing region of the exhaust passage; and a first mixing device arranged within the exhaust passage downstream of the injector within the mixing region, the first mixing device including a plurality of flaps, wherein the plurality of flaps are inclined relative to the longitudinal axis; a second mixing device arranged within the exhaust passage downstream of the first mixing device; wherein the injection axis of the injector intersects the first mixing device.

DE102015016284 A1 discloses a mixing system for an aftertreatment system, including a mixing tube. The mixing tube is provided in fluid communication with an exhaust conduit. The mixing system also includes a reductant injector positioned at an injection location on the mixing tube. The mixing system further includes a mixer assembly positioned downstream of the injection location. The mixer assembly includes a plurality of mixing elements provided in a series arrangement, such that each of the plurality of mixing elements is provided downstream of one another.

In US2012/0204541 A1 a mixer element to be placed between an internal combustion engine exhaust manifold and catalytic converter is provided. The mixer element includes a tubular conduit that receives an exhaust gas flow from the internal combustion engine, a first mixer configured to induce a first vortex of the exhaust gas flow in a first rotational direction and an injector disposed in the tubular conduit downstream of the first mixer, the injector being configured to inject a diesel emission fluid flow into the exhaust gas flow. The mixer element also includes a second mixer positioned downstream of the injector and a third mixer positioned downstream of the second mixer, the third mixer being configured to induce a second vortex of the exhaust gas flow and the diesel emission fluid mixture in a second rotational direction, opposite of the first rotational direction.

There is still a need for exhaust treatment devices that are compact and that provide more efficient and effective mixing of reactants.

### Summary

It is an object of the present disclosure to disclose a system for mixing a liquid spray into a gaseous flow according to claim 1, an exhaust treatment device including such a system, and a diesel-powered machine or a motor vehicle comprising such an exhaust treatment device.

According to an aspect of the present invention, there is provided a system for mixing a liquid spray into a gaseous flow, the system comprising: a main body defining an interior, the main body interior extending from a first end to a second end, the main body defining a circumferential wall extending between the first end and the second end, the circumferential wall or the first end defining an inlet opening, the main body also defining an outlet; an inlet arrangement disposed at the inlet opening, the inlet arrangement defining an inlet channel leading to the interior of the main body; a reaction zone disposed within the interior of the main body between the inlet opening and the outlet, the reaction zone being spaced from the first end to define a mixing region within the main body interior; a restrictor arrangement disposed within the interior of the main body between the first end and the reaction zone, the restrictor arrangement separating the mixing region into a first chamber and a second chamber, the restrictor arrangement defining a restricted passageway between the first and second chambers; wherein the first chamber comprises: a dosing arrangement configured to receive an injector to spray reactant into the gaseous flow so that the reactant mixes with the gaseous flow in the first chamber; a first swirl promoting means arranged between the inlet opening and the dosing arrangement; and a second swirl promoting means arranged between the dosing arrangement and the restrictor arrangement, such that a gaseous flow passing through said second swirl promoting means is swirled around before entering the restricted passageway and passing to the second chamber.

The inventors have found that the combination of a first swirl promoting means and a second swirl promoting means, arranged on respective sides of the dosing arrangement upstream of a restrictor arrangement, produces a surprisingly thorough mixing of the gaseous flow and the injected spray, which in turn improves the reaction between the gas and the sprayed substance in the reaction zone.

It should be noted that while the first swirl promoting means is said to be arranged between the inlet opening and the dosing arrangement, its shape may axially extend from a point upstream of the dosing arrangement (as referenced to the direction of the gaseous flow), to a point directly beneath or even somewhat downstream of the dosing arrangement, the essence being that it is arranged so as to produce a swirling motion in the gaseous flow at or prior to the point at which said gaseous flow first receives the liquid spray.

The inventors have found that by arranging the system in this way, the mixing occurs in several stages, which improves the overall quality of the mixing to a surprising degree. The first swirl promoting means, arranged upstream of the dosing arrangement, ensures that the gaseous flow has taken on a turbulent, swirling motion by the time it reaches the zone where it receives the spray. As a result, the droplets being sprayed into the gaseous flow are carried along in the direction of the swirl, rather than simply hitting the opposite inner wall of the main body interior where crystalline deposits might otherwise form. The second swirl further forces the spray droplets radially outwards by means of the centrifugal force. This radially outward motion is followed by a forced inward motion imposed by the restrictor arrangement, thus creating another source of turbulence and mixing.

According to the present invention, the first swirl promoting means and the second swirl promoting means are arranged to promote swirling in a first angular direction and a second angular direction respectively, said first angular direction and said second angular direction being mutually opposed.

In this embodiment, the second swirl promoting means forces the swirl to reverse its direction, thus imposing creating another source of turbulence and mixing. In addition, it forces the spray droplets radially outwards by means of the centrifugal force. This radially outward motion is followed by a forced inward motion imposed by the restrictor arrangement, also creating another source of turbulence and mixing.

In an embodiment of the system according to the present invention, the main body interior extends along a longitudinal axis from the first end to the second end, the dosing arrangement being configured so that an injection axis of any injector mounted to the dosing arrangement is not coaxial with the longitudinal axis of the main body.

It is an advantage of this embodiment that upon entry in the main body interior, the injected spray encounters a gaseous flow that is not purely tangential, thus improving the mixing of the spray with the gaseous flow.

In a non-claimed example , the main body is divided into a first main part and a second main part; the first main part comprising the first swirl promoting means and the dosing arrangement; the second main part comprising the second swirl promoting means and the restrictor arrangement; wherein the longitudinal axis of the second main part is arranged at an angle relative to the longitudinal axis of the first main part.

It is an advantage of this example that the mixing of the spray with the gaseous flow is further improved by imposing a change of direction on the gaseous flow after the spray has been added.

In a further non-claimed example, the dosing arrangement is configured so that an injection axis of any injector mounted to the dosing arrangement is substantially parallel to the longitudinal axis of the second main part.

It is an advantage of this particular example that the centrifugal spreading of the spray droplets in the gaseous flow prior to passing through the restrictor arrangement is improved.

In an embodiment of the system according to the present invention, the inlet arrangement is configured to orient the inlet channel at an angle to the main body to promote swirling of the gaseous flow.

It is an advantage of this embodiment that a degree of swirling can be introduced even before the gaseous flow passes through the first swirl promoting means, especially if the axis of the inlet channel is offset relative to the axis of the main body.

In an embodiment of the system according to the present invention, the first swirl promoting means and/or the second swirl promoting means comprises a baffle plate defining a plurality of scoops, pipes, louvers, or other direction adjusting members.

It is an advantage of this embodiment that it presents a very compact way to introduce a substantial degree of swirling in the gaseous flow.

In a particular embodiment, a combined open area of the plurality of openings defined by the baffle plate is at least as large as a transverse area of the restricted passageway.

It is an advantage of this particular embodiment that it reduces the overall pressure drop of the system, by presenting similarly sized passage openings at the various stages of the mixing zone. In a non-claimed example, the first swirl promoting means and/or the second swirl promoting means comprises a tube defining a plurality of scoops, louvers or other direction adjusting members. It is an advantage of this example that the spray of droplets issuing from an adequately positioned and oriented injector may be further scattered into the gaseous flow by colliding with the direction adjusting members of the tube.

In an embodiment, the system according to the present invention further comprises a spray protector system.

It is an advantage of this embodiment that it protects the spray from hitting fixed and potentially cooler parts of the system, which would otherwise be a likely initiation point for the formation of undesirable solid deposits.

The system according to the present invention further comprises one or more sheet metal surfaces arranged in the first chamber so as to be substantially surrounded by a gaseous flow entering through said inlet opening, and the dosing arrangement is configured so that an injection axis of any injector mounted to the dosing arrangement intersects said one or more sheet metal surfaces.

It is an advantage of this embodiment that it protects the spray from hitting fixed and potentially cooler parts of the system, such as the inner wall of the main body, which would otherwise be a likely initiation point for the formation of undesirable solid deposits. As the one or more sheet metal surfaces receive heat from the gaseous flow that surrounds them, deposit formation can be avoided. Instead, the spray droplets that hit the one or more sheet metal surfaces scatter and get carried along with the gaseous flow.

According to an aspect of the present invention, there is provided an exhaust treatment device for treating exhaust comprising the system for mixing a liquid spray into a gaseous flow as described above, wherein an aftertreatment substrate is disposed in said reaction zone, and wherein said inlet arrangement is adapted to receive an exhaust flow of an internal combustion engine.

The system of the present invention is particularly suitable for use as an exhaust treatment device for treating exhaust gases from an internal combustion engine. In particular, the reaction zone may comprise an aftertreatment substrate (e.g. a Diesel particle filter, Selective Catalytic Reduction on Filter, or regular Selective Catalytic Reduction substrate). The liquid spray may consist of a urea solution (e.g. a eutectic urea/water solution, such as the ones commercially available under the names AdBlue and DEF) .

According to an aspect of the present invention, there is provided a motor vehicle comprising the exhaust treatment device as described above.

According to an aspect of the present invention, there is provided a diesel-powered machine comprising the exhaust treatment device as described above.

### Brief Description of the Figures

These and other features and advantages of embodiments of the present invention will be described in more detail with reference to the attached drawings, in which:
- Figure 1 presents a cross section of a system for mixing a liquid spray into a gaseous flow which has not been claimed;
- Figure 2a presents a cross section of a system for mixing a liquid spray into a gaseous flow which has not been claimed;
- Figure 2b illustrates first swirl promoting means as may be used in the example shown in Figure 2a;
- Figure 3 presents a cross section of a system for mixing a liquid spray into a gaseous flow which has not been claimed;
- Figure 4 presents a cross section of a system for mixing a liquid spray into a gaseous flow provided with metal surfaces arranged in a plane intersecting the injection axis, as may be used in embodiments of the present invention;
- Figure 5 presents a cross section of a system for mixing a liquid spray into a gaseous flow provided with an injector having an injection axis intersecting with the first swirl promoting means, which has not been claimed;
- Figure 6a presents a cross section of a system for mixing a liquid spray into a gaseous flow which has not been claimed;
- Figure 6b illustrates first swirl promoting means as may be used in the example shown in Figure 6a;
- Figure 7a presents a cross section of a system for mixing a liquid spray into a gaseous flow which has not been claimed;
- Figure 7b illustrates first swirl promoting means as may be used in the example shown in Figure 7a;
- Figure 8 illustrates gaseous flow impact blades as may be used in embodiments of the present invention;
- Figure 9 provides representative test results pertaining to the NH₃ uniformity index and the formation of solid deposits in various embodiments of the present invention; and
- Figure 10 provides representative test results pertaining to the formation of solid deposits in various embodiments of the present invention.

Throughout the figures, like reference numerals have been used to refer to like elements.

### Description of Embodiments

Throughout the description of the figures, terms such as "above" and "below" are used to denote relative positions of elements of the system in the orientation in which they are depicted in the figures. The use of these terms is not meant to limit the invention to arrangements having their upside and downside oriented in this way when in use.

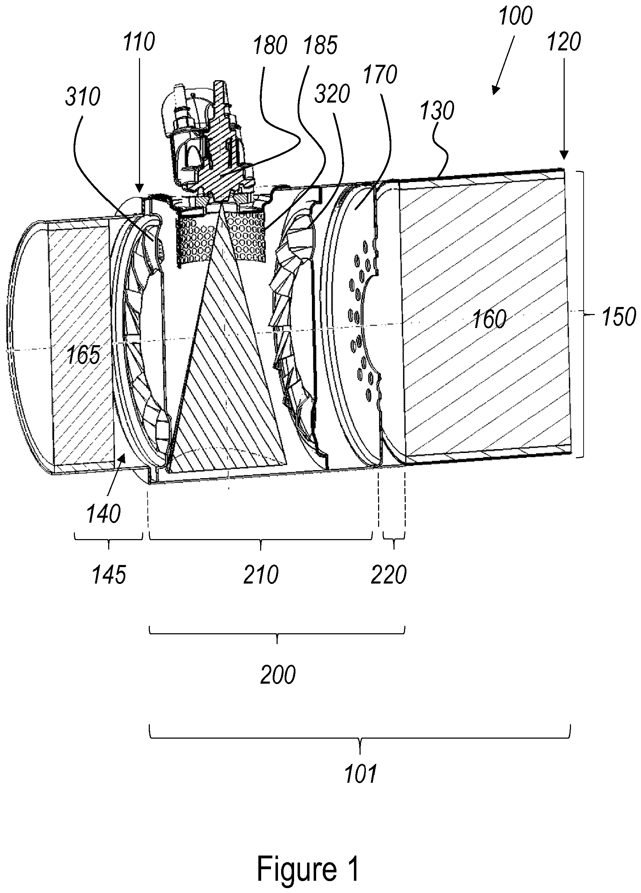

Figure 1 presents a cross section of a system for mixing a liquid spray into a gaseous flow according to an example, which has not been claimed. The system comprises a main body **100** defining an interior **101,** the main body interior extending from a first end **110** to a second end **120.** The skilled person will appreciate that the main body **100** has been given a certain length for the purpose of keeping the figure clear, the second end **120** may in reality be at a shorter or greater distance from the first end **110.** The main body **100** defines a circumferential wall **130** extending between the first end and the second end; i.e., the main body interior has the nature of hollow tube. In the illustrated case, the first end **110** defines an inlet opening **140** (in a variant, not illustrated, the circumferential wall **130** defines an inlet opening). The main body **100** also defines an outlet **150.**

An inlet arrangement is disposed at the inlet opening **140.** The inlet arrangement defines an inlet channel **145** leading to the interior **101** of the main body **100.** Through this inlet channel **145,** the gaseous flow that is to be mixed with the liquid spray enters the system. In the illustrated case, an optional pre-treatment substrate **165** (e.g. a Diesel Oxidation Catalyst or a Diesel particle filter) is present in a part of the inlet channel **145.**

A reaction zone **160** is disposed within the interior **101** of the main body **100** between the inlet opening **140** and the outlet **150.** The reaction zone **160** is spaced from the first end **110** to define a mixing region **200** within the main body interior **101.** This mixing region **200** is where the mixing of the liquid spray and the gaseous flow will take place, before the duly mixed aerosol enters the reaction zone **160.**

A restrictor arrangement **170** is disposed within the interior **101** of the main body **100** between the first end **110** and the reaction zone **160.** The restrictor arrangement **170** may be a transverse plate provided with one or more openings. In the illustrated case, the restrictor arrangement **170** is a transverse plate provided with a circular central opening and a plurality of smaller openings arranged around the central opening. The opening or pattern of openings leave the ring-shaped radially outer portion of the plate in place to block the gaseous flow from passing the restrictor arrangement **170** along the edge of the main body interior **170.** Other shapes of the restrictor arrangement **170** may be used to obtain the same or substantially the same effect, such as (without limitation) a plurality of inwardly directed peripheral teeth (not illustrated).

The restrictor arrangement **170** separates the mixing region **200** into a first chamber **210** and a second chamber **220,** whereby the restrictor arrangement defines a restricted passageway between the chambers. The first chamber comprises: a first swirl promoting means **310,** a dosing arrangement **180,** and a second swirl promoting means **320.**

The dosing arrangement **180** is configured to receive an injector to spray reactant (e.g. an aqueous urea solution) into the gas (e.g. exhaust gas of an internal combustion engine) so that the reactant mixes with the gas in the first chamber **210.** In the illustrated case, the system further comprises a spray protector system **185,** which may be formed as a cylindrical grate arranged around the injection zone.

The first swirl promoting means **310** is arranged between the inlet opening and the dosing arrangement. As a result, the gaseous flow entering the main body interior **101** is forced into a swirling motion before receiving the liquid spray. The second swirl promoting means **320** is arranged between the dosing arrangement **180** and the restrictor arrangement **170,** such that a gaseous flow passing through the second swirl promoting means **320** is swirled around (whereby the droplets are forced radially outwards as a result of the centrifugal force) before entering the restricted passageway and passing to the second chamber **200.**

The first swirl promoting means **310** and/or the second swirl promoting means **320** may comprise a baffle plate defining a plurality of scoops, pipes, louvers, or other direction adjusting members. Without loss of generality, the first swirl promoting means **310** and second swirl promoting means **320** of Figure 1 are both formed as baffle plates defining a plurality of louvers. Preferably, a combined open area of the plurality of openings defined by the baffle plate is at least as large as a transverse area of the restricted passageway. Without loss of generality, the first swirl promoting means **310** and second swirl promoting means **320** of Figure 1 are both arranged in a plane perpendicular to the axis of the main body **100,** but the skilled person will appreciate that a similar effect may be obtained by means of elements placed at an angle.

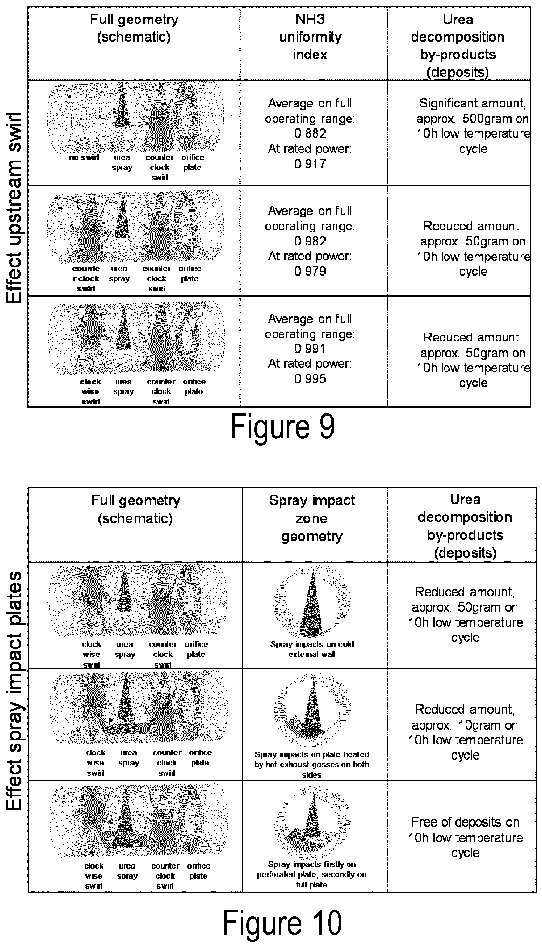

A system of the type illustrated in Figure 1, implemented for use as an SCR system for the treatment of exhaust, has been shown to result in a better mixing of injected urea (urea is injected as an ammonia precursor). Representative test results are summarized in the table of Figure 9. At full operating range, the measured NH₃ uniformity index in a system with a first swirl promoting means **310** and a second swirl promoting means **320** arranged to impose the same swirling direction was 0.982, versus 0.882 in a system lacking the first swirl promoting means **310.** At rated power, the measured NH₃ uniformity index in a system with a first swirl promoting means **310** and a second swirl promoting means **320** arranged to impose the same swirling direction was 0.979, versus 0.917 in a system lacking the first swirl promoting means **310.**

Moreover, while the system lacking the first swirl promoting means **310** tended to present a build-up of significant deposits of urea decomposition by-products on the cold circumferential wall **130** (approximately 500g in a 10h low-temperature cycle), this was greatly reduced in the system with a first swirl promoting means **310** and a second swirl promoting means **320** arranged to impose the same swirling direction (approximately 50g in a 10h low-temperature cycle).

Preferably, the first swirl promoting means **310** and the second swirl promoting means **320** are arranged to promote swirling in a first angular direction and a second angular direction respectively, the first angular direction and the second angular direction being mutually opposed. Such an arrangement has been shown to result in even better mixing of injected urea in a system otherwise identical to the one described above, as also shown in the table of Figure 9. At full operating range, the measured NH₃ uniformity index in a system with opposing swirl directions of the first swirl promoting means **310** and the second swirl promoting means **320** was 0.991, versus 0.982 in a system with identical swirl directions. At rated power, the measured NH₃ uniformity index in a system with opposing swirl directions of the first swirl promoting means **310** and the second swirl promoting means **320** was 0.995, versus 0.979 in a system with identical swirl directions. The observed degree of deposit formation was substantially the same for the system with opposing swirl directions and the system with identical swirl directions.

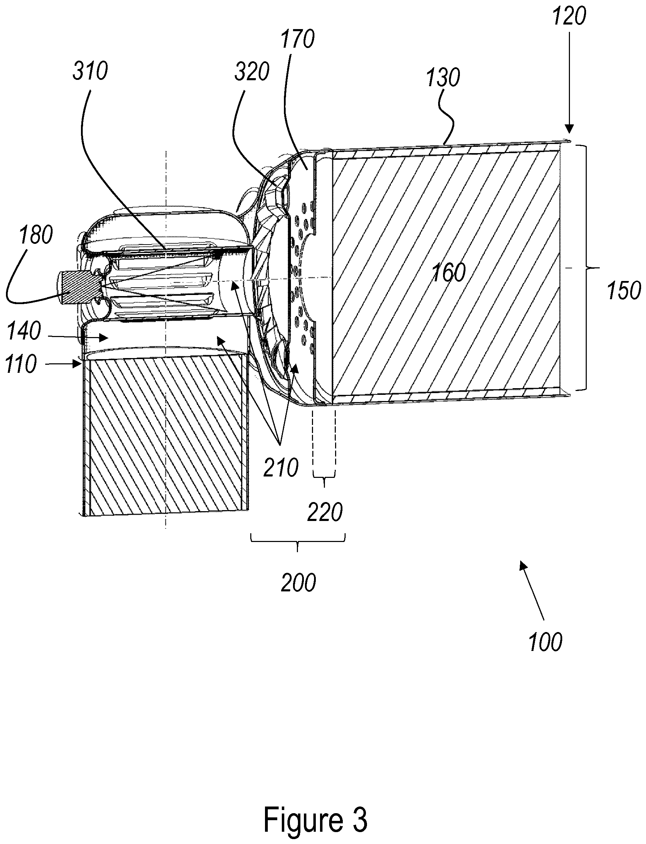

In the system illustrated in Figure 1, the main body interior **101** extends along a longitudinal axis from the first end **110** to the second end **120.** The dosing arrangement **180** is configured so that an injection axis of any injector mounted to the dosing arrangement **180** is not coaxial with the longitudinal axis of the main body **100.** However, the inventors have found that such a linear arrangement is not strictly necessary to obtain the advantages as will be explained in more detail below with reference to Figure 3.

Furthermore, in the system illustrated in Figure 1, the inlet arrangement is configured to orient the inlet channel **145** in the direction of the axis of the main body **100.** at an angle to the main body **100** to promote swirling of the gas. However, the inventors have found that such a linear arrangement is not strictly necessary to obtain the advantages mentioned. The inlet arrangement may be configured to orient the inlet channel **145** at an angle to the main body **100,** and preferably at an offset to the axis of the main body **100,** to promote swirling of the gas (not illustrated).

Examples may further comprise a directional flow expansion device disposed in the second chamber **220** of the mixing region **200** (not illustrated). This directional flow expansion device may include a baffle plate defining a plurality of openings. Further details of a flow expansion device may be found in international patent application publication no. WO 2015/130789 A1 in the name of Donaldson Company, Inc.

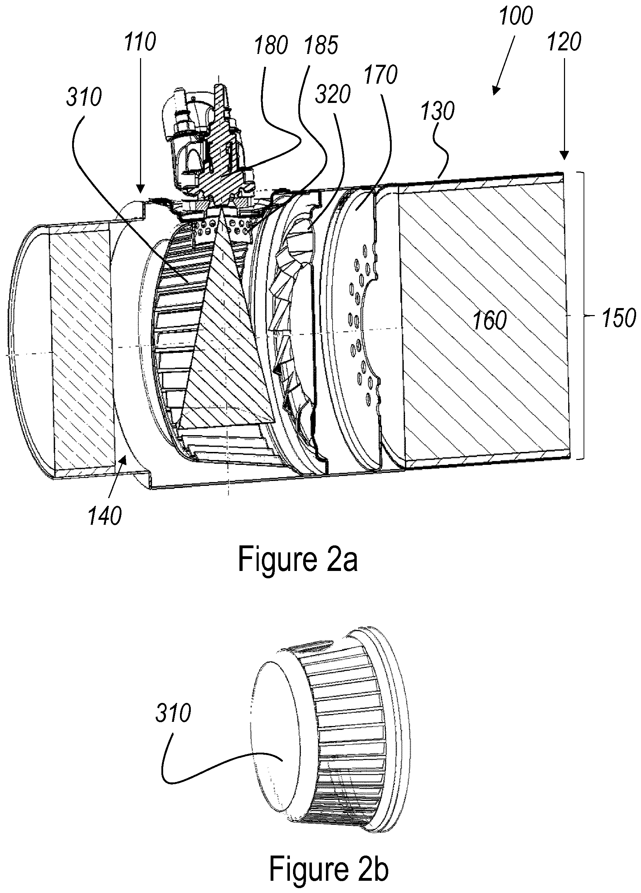

Figure 2a presents a cross section of a system for mixing a liquid spray into a gaseous flow according to an example, which has not been claimed. For reasons of conciseness, only the substantive differences with the first example will be described in detail.

In the illustrated case, the first swirl promoting means 310 comprises a tube defining a plurality of louvers to adjust the direction of the incoming gaseous flow so as to create a swirl. The tube may likewise define a plurality of scoops or other direction adjusting members. For completeness, it is noted that the second swirl promoting means **320** may be conceived in a similar way (not illustrated).

As noted above, while the first swirl promoting means **310** is said to be arranged between the inlet opening and the dosing arrangement, its shape may in fact axially extend from a point upstream of the dosing arrangement (as referenced to the direction of the gaseous flow), to a point directly beneath or even somewhat downstream of the dosing arrangement **180,** as is the case in the embodiment of Figure 2, which has not been claimed. Accordingly, mixing and injection occur in the same axial region, while still meeting the requirement of producing a swirling motion in the gaseous flow at or prior to the point at which said gaseous flow first receives the liquid spray.

By aiming the injector towards the louvered tube, which is constantly heated by the incoming gaseous flow, the creation of solid deposits (which could occur when the liquid spray hits a cold surface) can be avoided.

Figure 2b illustrates the first swirl promoting means **310** as may be used in the example shown in Figure 2a, which has not been claimed.

Figure 3 presents a cross section of a system for mixing a liquid spray into a gaseous flow according to a third example, which has not been claimed. For reasons of conciseness, only the substantive differences with the first example will be described in detail.

In the illustrated case, the main body **100** is divided into a first main part and a second main part. The first main part comprises the first swirl promoting means **310** and the dosing arrangement **180.** The second main part comprising the second swirl promoting means **320** and the restrictor arrangement **170.** The longitudinal axis of the second main part is arranged at an angle relative to the longitudinal axis of the first main part. The dosing arrangement **180** may be configured so that an injection axis of any injector mounted to the dosing arrangement **180** is substantially parallel to the longitudinal axis of the second main part.

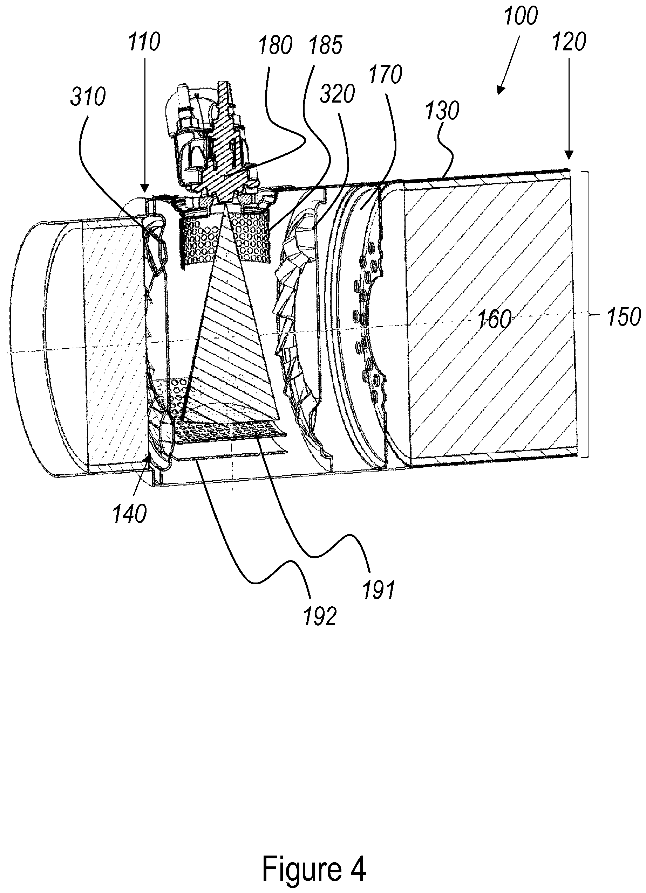

Figure 4 presents a cross section of a system for mixing a liquid spray into a gaseous flow provided with metal surfaces arranged in a plane intersecting the injection axis, as may be used in embodiments of the present invention.

The presence of a sheet metal plate in the path of the liquid spray, heated by a gaseous flow surrounding it, has been shown to greatly reduce the build-up of deposits of urea decomposition by-products in an SCR-system according to an embodiment of the present invention. Representative test data are shown in the table of Figure 10. While a 10h low-temperature cycle results in approximately 50g of deposits on the outer wall **130** in the absence of a separate, heated sheet metal surface, the presence of such a sheet metal surface reduces this amount to approximately 10g.

In the illustrated case, the system comprises, without loss of generality, two sheet metal surfaces **191, 192** arranged in the first chamber **210** so as to be substantially surrounded by a gaseous flow entering through the inlet opening **140.** The dosing arrangement **180** is configured so that an injection axis of any injector mounted to the dosing arrangement intersects the sheet metal surfaces **191, 192.** This arrangement ensures that the plates on which the liquid spray impinges constantly receive heat from the incoming gaseous flow, avoiding the risk that solid deposits form there. In the illustrated case, the upper plate **191** is a grate or a perforated plate, while the lower plate **192** is a solid plate.

The combination of a perforated plate **191** and a solid plate **192,** as illustrated in Figure 4, has been shown to further reduce the build-up of deposits of urea decomposition by-products in an SCR-system according to an embodiment of the present invention, as also shown in the table of Figure 10. In a 10h low-temperature cycle, no noticeable deposits were formed.

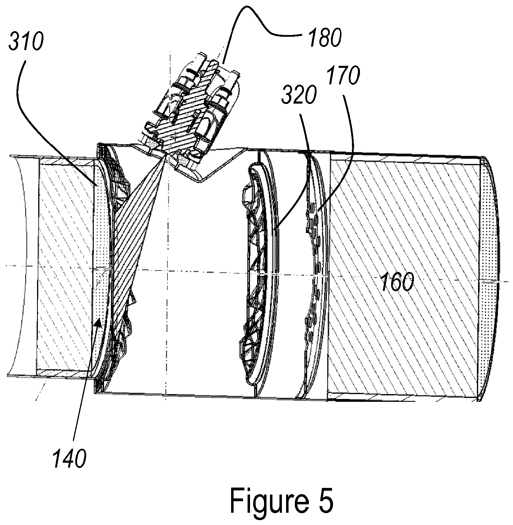

Figure 5 presents a cross section of a system for mixing a liquid spray into a gaseous flow provided with an injector having an injection axis intersecting with the first swirl promoting means, as may be used in examples of the present invention, which has not been claimed. In this case, the first swirl promoting means 310 is a swirl baffle with louvers as already described in the context of Figure 1. By aiming the injector towards the swirl baffle, which is constantly heated by the incoming gaseous flow, the creation of solid deposits can be avoided while removing the need for the separate sheet metal plates.

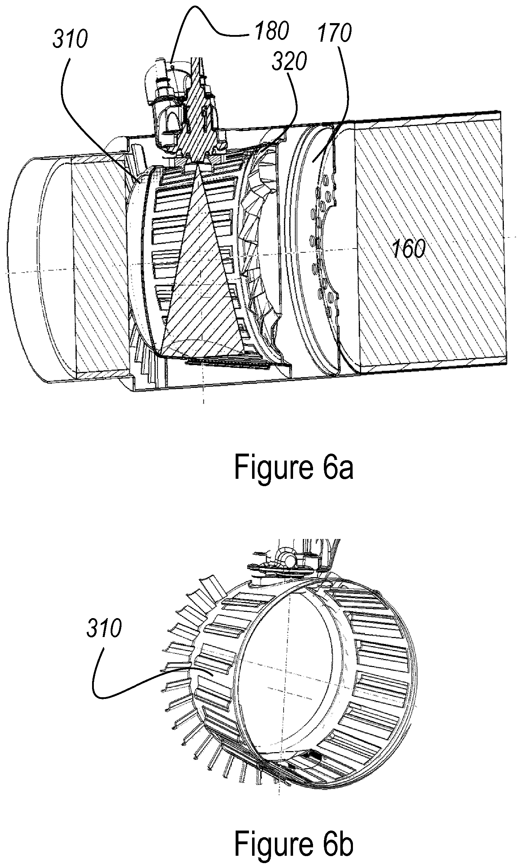

Figure 6a presents a cross section of a system for mixing a liquid spray into a gaseous flow according to an example, which has not been claimed. For reasons of conciseness, only the substantive differences with the first example will be described in detail.

In this case, the first swirl promoting means **310** is a tube with louvers on the upstream side for creating swirl, and slits in the zone directly below the dosing arrangement **180** for allowing the liquid spray to enter the gaseous flow. By aiming the injector towards the slitted tube, which is constantly heated by the incoming gaseous flow, the creation of solid deposits can be avoided while removing the need for the separate sheet metal plates.

Figure 6b illustrates first swirl promoting means as may be used in the example shown in Figure 6a in more detail.

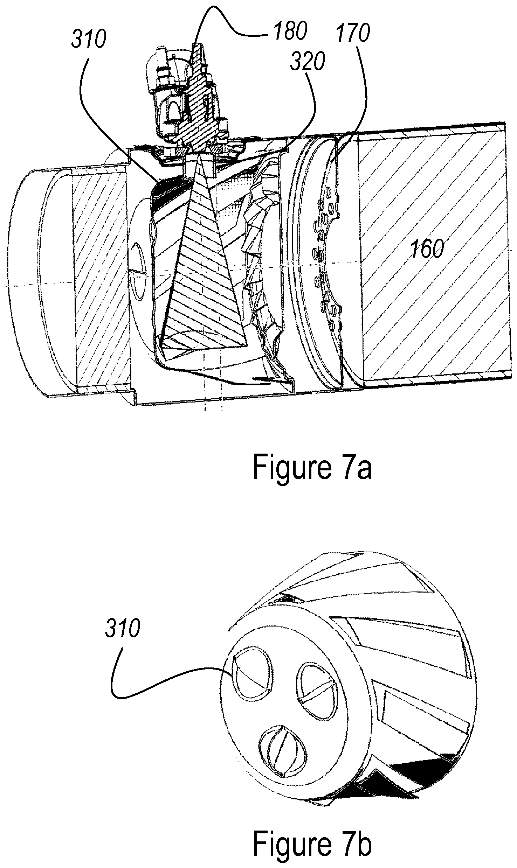

Figure 7a presents a cross section of a system for mixing a liquid spray into a gaseous flow according to a fifth example, which has not been claimed. For reasons of conciseness, only the substantive differences with the first example will be described in detail.

In this case, the first swirl promoting means **310** is a tube with scoops on the upstream side for creating swirl, and slanted slits in the zone directly below the dosing arrangement **180** that contribute the creation of swirl and allow the liquid spray to enter the gaseous flow. By aiming the injector towards the slitted tube, which is constantly heated by the incoming gaseous flow, the creation of solid deposits can be avoided while removing the need for the separate sheet metal plates.

Figure 7b illustrates first swirl promoting means as may be used in the example shown in Figure 7a in more detail, which have not been claimed.

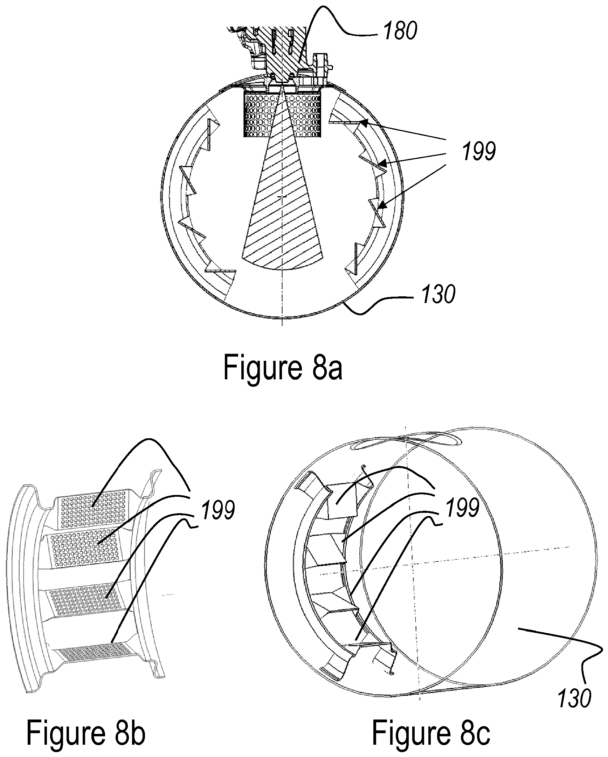

Figures 8a-c illustrate gaseous flow impact blades as may be used in examples, which have not been claimed.

In the illustrated case, the circumferential wall **130** is provided with a plurality of stepped impact blades **199,** arranged in the axial region that includes the dosing arrangement **180** (see in particular the cross-section in Figure 8a). As these impact blades **199** are provided downstream of the first swirl promoting means **310,** they are approached by a gaseous flow that is already in a swirling motion. Due to their placement, the impact blades **199** tend to interrupt the flow, causing additional flow turbulence (and hence, improved mixing), pushing the flow back towards central axis (by counteracting the centrifugal effect of the swirl), increasing the heat transfer from the (hot) gas to the blades **199,** and reducing any undesired local cooling of the circumferential **130** due to spray impaction. The individual impact blades **199** may be perforated, as shown in Figure 8b. A part combining several impact blades **199** may be attached to the sides of the circumferential wall **130,** as shown in Figure 8c.

The present invention also pertains to an exhaust treatment device for treating exhaust comprising the system for mixing a liquid spray into a gaseous flow according to any of the preceding claims, wherein an aftertreatment substrate (e.g. a Diesel particle filter, Selective Catalytic Reduction on Filter, or regular Selective Catalytic Reduction substrate) is disposed in the reaction zone **160**, and wherein the inlet arrangement is adapted to receive an exhaust flow of an internal combustion engine. The liquid spray may consist of a urea solution (e.g. a eutectic urea/water solution, such as the ones commercially available under the names AdBlue and DEF).

The present invention also pertains to a motor vehicle comprising the exhaust treatment device described above, arranged for the purpose of treating the exhaust produced by the vehicle's internal combustion engine.

While the invention has been described hereinabove with reference to particular embodiments, this was done to clarify and not to limit the invention, the invention is defined by the appended claims.

## Claims

1. A system for mixing a liquid spray into a gaseous flow, the system comprising:
- a main body (100) defining an interior (101), the main body interior extending from a first end (110) to a second end (120), the main body (100) defining a circumferential wall (130) extending between the first end and the second end, the circumferential wall (130) or the first (110) end defining an inlet opening (140), the main body (100) also defining an outlet (150);
- an inlet arrangement disposed at the inlet opening (140), the inlet arrangement defining an inlet channel (145) leading to the interior (101) of the main body (100);
- a reaction zone (160) disposed within the interior (101) of the main body (100) between the inlet opening (140) and the outlet (150), the reaction zone (160) being spaced from the first end (110) to define a mixing region (200) within the main body interior (101);
- a restrictor arrangement (170) disposed within the interior (101) of the main body (100) between the first end (110) and the reaction zone (160), the restrictor arrangement (170) separating the mixing region (200) into a first chamber (210) and a second chamber (220), the restrictor arrangement defining a restricted passageway between the first and second chambers;
wherein the first chamber comprises:
- a dosing arrangement (180) configured to receive an injector to spray reactant into the gaseous flow so that the reactant mixes with the gaseous flow in the first chamber (210);
- a first swirl promoting means (310) arranged between the inlet opening and the dosing arrangement;
- one or more sheet metal surfaces (191, 192) arranged so as to be substantially surrounded by a gaseous flow entering through said inlet opening (140), wherein the dosing arrangement (180) is configured so that an injection axis of any injector mounted to the dosing arrangement intersects said one or more sheet metal surfaces (191, 192); and
- a second swirl promoting means (320) arranged between the dosing arrangement (180) and the restrictor arrangement (170), such that a gaseous flow passing through said second swirl promoting means (320) is swirled around before entering the restricted passageway and passing to the second chamber (200) ;
**characterised in that** said restrictor arrangement comprises a transverse plate provided with one or more openings, and **in that** the first swirl promoting means (310) and the second swirl promoting means (320) are arranged to promote swirling in a first angular direction and a second angular direction respectively, said first angular direction and said second angular direction being mutually opposed.

2. The system according to claim 1, wherein said restrictor arrangement comprises a transverse plate provided with a circular central opening and a plurality of smaller openings arranged around the central opening.

3. The system according to claim 1 or 2, wherein said one or more sheet metal surfaces (191, 192) comprise a perforated plate (191) and a solid plate (192).

4. The system according to any of the preceding claims, wherein the main body interior (101) extends along a longitudinal axis from the first end (110) to the second end (120), the dosing arrangement (180) being configured so that an injection axis of any injector mounted to the dosing arrangement (180) is not coaxial with the longitudinal axis of the main body (100).

5. The system according to any of claims 1 to 2, wherein the main body (100) is divided into a first main part and a second main part; the first main part comprising the first swirl promoting means (310) and the dosing arrangement (180); the second main part comprising the second swirl promoting means (320) and the restrictor arrangement (170); wherein the longitudinal axis of the second main part is arranged at an angle relative to the longitudinal axis of the first main part.

6. The system according to any of the preceding claims, wherein the first swirl promoting means (310) and/or the second swirl promoting means (320) comprises a baffle plate defining a plurality of scoops, pipes, louvers, or other direction adjusting members.

7. The system according to claim 6, wherein a combined open area of the plurality of openings defined by the baffle plate is at least as large as a transverse area of the restricted passageway.

8. The system according to any of the preceding claims, further comprising a spray protector system (185).

9. An exhaust treatment device for treating exhaust comprising the system for mixing a liquid spray into a gaseous flow according to any of the preceding claims, wherein an aftertreatment substrate is disposed in said reaction zone (160), and wherein said inlet arrangement is adapted to receive an exhaust flow of an internal combustion engine.

10. A motor vehicle comprising the exhaust treatment device according to claim 9.

11. A diesel-powered machine comprising the exhaust treatment device according to claim 9.

## Patentansprüche

1. System zum Mischen eines flüssigen Sprühmittels in eine gasförmige Strömung, wobei das System Folgendes umfasst:
- einen Hauptkörper (100), der einen Innenraum (101) definiert, wobei der Hauptkörperinnenraum sich von einem ersten Ende (110) zu einem zweiten Ende (120) erstreckt, wobei der Hauptkörper (100) eine zirkumferentielle Wand (130) definiert, die sich zwischen dem ersten Ende und dem zweiten Ende erstreckt, wobei die zirkumferentielle Wand (130) oder das erste (110) Ende eine Einlassöffnung (140) definiert, wobei der Hauptkörper (100) auch einen Auslass (150) definiert;
- eine Einlassanordnung, die an der Einlassöffnung (140) angeordnet ist, wobei die Einlassanordnung einen Einlasskanal (145) definiert, der zum Innenraum (101) des Hauptkörpers (100) führt;
- eine Reaktionszone (160), die innerhalb des Innenraums (101) des Hauptkörpers (100) zwischen der Einlassöffnung (140) und dem Auslass (150) angeordnet ist, wobei die Reaktionszone (160) von dem ersten Ende (110) beabstandet ist, um eine Mischregion (200) innerhalb des Hauptkörperinnenraums (101) zu definieren;
- eine Begrenzeranordnung (170), die innerhalb des Innenraums (101) des Hauptkörpers (100) zwischen dem ersten Ende (110) und der Reaktionszone (160) angeordnet ist, wobei die Begrenzeranordnung (170) die Mischregion (200) in eine erste Kammer (210) und eine zweite Kammer (220) trennt, wobei die Begrenzeranordnung einen eingeschränkten Durchgang zwischen der ersten und der zweiten Kammer definiert;
wobei die erste Kammer Folgendes umfasst:
- eine Dosieranordnung (180) die zum Aufnehmen eines Injektors zum Sprühen von Reaktionsmittel in die gasförmige Strömung konfiguriert ist, so dass das Reaktionsmittel sich mit der gasförmigen Strömung in der ersten Kammer (210) mischt;
- ein erstes wirbelunterstützendes Mittel (310), das zwischen der Einlassöffnung und der Dosieranordnungen angeordnet ist;
- eine oder mehrere Metallblechflächen (191, 192), die so angeordnet sind, dass sie im Wesentlichen von einer gasförmigen Strömung umgeben sind, die durch die Einlassöffnung (140) eintritt, wobei die Dosieranordnung (180) so konfiguriert ist, dass eine Injektionsachse irgendeines Injektors, der an der Dosieranordnung montiert ist, sich mit einer oder mehreren Metallblechflächen (191, 192) überschneidet; und
- ein zweites wirbelunterstützendes Mittel (320), das zwischen der Dosieranordnung (180) und der Begrenzeranordnung (170) angeordnet ist, derart, dass eine gasförmige Strömung, die durch das zweite wirbelunterstützende Mittel (320) hindurchgeht, herumgewirbelt wird, bevor es in den eingeschränkten Durchgang eintritt und zu der zweiten Kammer (200) übergeht;
**dadurch gekennzeichnet, dass** die Begrenzeranordnungeine querlaufende Platte umfasst, die mit einer oder mehreren Öffnungen ausgestattet ist, und dass das erste wirbelunterstützende Mittel (310) und das zweite wirbelunterstützende Mittel (320) angeordnet sind, um Wirbeln in einer ersten winkelförmigen Richtung bzw. einer zweiten winkelförmigen Richtung zu unterstützen, wobei die erste winkelförmige Richtung und die zweite winkelförmige Richtung gegenseitig entgegengesetzt sind.

2. System nach Anspruch 1, wobei die Begrenzeranordnung eine querlaufende Platte, die mit einer runden mittigen Öffnung ausgestattet ist, und eine Mehrzahl kleinerer Öffnungen umfasst, die um die mittigen Öffnung angeordnet sind.

3. System nach Anspruch 1 oder 2, wobei die eine oder mehreren Metallblechflächen (191, 192) eine durchlöcherte Platte (191) und eine massive Platte (192) umfasst/umfassen.

4. System nach einem der vorhergehenden Ansprüche, wobei der Hauptkörperinnenraum (101) sich einer Längsachse entlang von dem ersten Ende (110) zu dem zweiten Ende (120) erstreckt, wobei die Dosieranordnung (180) so konfiguriert ist, dass eine Injektionsachseirgendeines Injektors, der an der Dosieranordnung (180) montiert ist, nicht koaxial mit der Längsachse des Hauptkörpers (100) liegt.

5. System nach einem der Ansprüche 1 bis 2, wobei der Hauptkörper (100) in einen ersten Hauptteil und einen zweiten Hauptteil geteilt ist; wobei der erste Hauptteil das erste wirbelunterstützende Mittel (310) und die Dosieranordnung (180) umfasst; wobei der zweite Hauptteil das zweite wirbelunterstützende Mittel (320) und die Begrenzeranordnung (170) umfasst; wobei die Längsachse des zweiten Hauptteils in einem Winkel zur Längsachse des ersten Hauptteils angeordnet ist.

6. System nach einem der vorhergehenden Ansprüche, wobei das erste wirbelunterstützende Mittel (310) und/oder das zweite wirbelunterstützende Mittel (320) eine Prallplatte umfasst/umfassen, die eine Mehrzahl von Schaufeln, Rohren, Lüftungsgittern oder anderen richtungseinstellenden Elementen definiert

7. System nach Anspruch 6, wobei ein kombinierter offener Bereich der Mehrzahl von Öffnungen, die durch die Prallplatte definiert sind, mindestens so groß ist wie ein Querbereich des eingeschränkten Durchgangs.

8. System nach einem der vorhergehenden Ansprüche, das ferner ein Sprühmittelschutzsystem (185) umfasst.

9. Auspuffbehandlungsvorrichtung zum Behandeln von Auspuff, umfassend das System zum Mischen eines flüssigen Sprühmittels in eine gasförmige Strömung nach einem der vorhergehenden Ansprüche, wobei ein Nachbehandlungssubstrat in der Reaktionszone (160) angeordnet ist und wobei die Einlassanordnung geeignet ist, eine Auspuffströmung eines Verbrennungsmotors aufzunehmen.

10. Motorfahrzeug umfassend die Auspuffbehandlungsvorrichtung nach Anspruch 9.

11. Dieselgetriebene Maschine umfassend die Auspuffbehandlungsvorrichtung nach Anspruch 9.

## Revendications

1. Système pour mélanger une pulvérisation liquide dans un flux gazeux, le système comprenant :
- un corps principal (100) définissant un intérieur (101), l'intérieur de corps principal s'étendant depuis une première extrémité (110) jusqu'à une seconde extrémité (120), le corps principal (100) définissant une paroi circonférentielle (130) s'étendant entre la première extrémité et la seconde extrémité, la paroi circonférentielle (130) ou la première extrémité (110) définissant une ouverture d'entrée (140), le corps principal (100) définissant également une sortie (150) ;
- un agencement d'entrée disposé au niveau de l'ouverture d'entrée (140), l'agencement d'entrée définissant un canal d'entrée (145) conduisant à l'intérieur (101) du corps principal (100) ;
- une zone de réaction (160) disposée dans l'intérieur (101) du corps principal (100) entre l'ouverture d'entrée (140) et la sortie (150), la zone de réaction (160) étant espacée de la première extrémité (110) pour définir une région de mélange (200) dans l'intérieur de corps principal (101) ;
- un agencement de restriction (170) disposé dans l'intérieur (101) du corps principal (100) entre la première extrémité (110) et la zone de réaction (160), l'agencement de restriction (170) séparant la région de mélange (200) en une première chambre (210) et en une seconde chambre (220), l'agencement de restriction définissant un passage limité entre les première et seconde chambres ;
dans lequel la première chambre comprend :
- un agencement de dosage (180) configuré pour recevoir un injecteur pour pulvériser un réactif dans le flux gazeux de sorte que le réactif se mélange avec le flux gazeux dans la première chambre (210) ;
- un premier moyen de facilitation de tourbillon (310) agencé entre l'ouverture d'entrée et l'agencement de dosage ;
- une ou plusieurs surfaces de tôle (191, 192) agencées de façon à être sensiblement entourées par un flux gazeux entrant à travers ladite ouverture d'entrée (140), dans lequel l'agencement de dosage (180) est configuré de sorte qu'un axe d'injection de n'importe quel injecteur monté sur l'agencement de dosage croise lesdites une ou plusieurs surfaces de tôle (191, 192) ; et
- un second moyen de facilitation de tourbillon (320) agencé entre l'agencement de dosage (180) et l'agencement de restriction (170), de sorte qu'un flux gazeux passant à travers ledit second moyen de facilitation de tourbillon (320) tourbillonne avant d'entrer dans le passage limité et de passer à la seconde chambre (200) ;
**caractérisé en ce que** ledit agencement de restriction comprend une plaque transversale munie d'une ou plusieurs ouvertures, et
**en ce que** le premier moyen de facilitation de tourbillon (310) et le second moyen de facilitation de tourbillon (320) sont agencés pour favoriser le tourbillonnement respectivement dans un premier sens angulaire et un second sens angulaire, ledit premier sens angulaire et ledit second sens angulaire étant mutuellement opposés.

2. Système selon la revendication 1, dans lequel ledit agencement de restriction comprend une plaque transversale munie d'une ouverture centrale circulaire et d'une pluralité d'ouvertures plus petites agencées autour de l'ouverture centrale.

3. Système selon la revendication 1 ou 2, dans lequel lesdites une ou plusieurs surfaces de tôle (191, 192) comprennent une plaque perforée (191) et une plaque pleine (192).

4. Système selon l'une quelconque des revendications précédentes, dans lequel l'intérieur de corps principal (101) s'étend le long d'un axe longitudinal depuis la première extrémité (110) jusqu'à la seconde extrémité (120), l'agencement de dosage (180) étant configuré de sorte qu'un axe d'injection de n'importe quel injecteur monté sur l'agencement de dosage (180) n'est pas coaxial avec l'axe longitudinal du corps principal (100).

5. Système selon l'une quelconque des revendications 1 à 2, dans lequel le corps principal (100) est divisé en une première partie principale et en une seconde partie principale ; la première partie principale comprenant le premier moyen de facilitation de tourbillon (310) et l'agencement de dosage (180) ; la seconde partie principale comprenant le second moyen de facilitation de tourbillon (320) et l'agencement (170) de restriction ; dans lequel l'axe longitudinal de la seconde partie principale est agencé à un certain angle par rapport à l'axe longitudinal de la première partie principale.

6. Système selon l'une quelconque des revendications précédentes, dans lequel le premier moyen de facilitation de tourbillon (310) et/ou le second moyen de facilitation de tourbillon (320) comprennent une plaque déflectrice définissant une pluralité d'ouïes, de tuyaux, de déflecteurs, ou d'autres éléments d'ajustement de direction.

7. Système selon la revendication 6, dans lequel une aire ouverte combinée de la pluralité d'ouvertures définies par la plaque déflectrice est au moins aussi grande qu'une aire transversale du passage restreint.

8. Système selon l'une quelconque des revendications précédentes, comprenant en outre un système de protection de pulvérisation (185).

9. Dispositif de traitement d'échappement pour traiter un échappement comprenant le système pour mélanger une pulvérisation liquide dans un flux gazeux selon l'une quelconque des revendications précédentes, dans lequel un substrat de post-traitement est disposé dans ladite zone de réaction (160), et dans lequel ledit agencement d'entrée est conçu pour recevoir un flux d'échappement d'un moteur à combustion interne.

10. Véhicule automobile comprenant le dispositif de traitement d'échappement selon la revendication 9.

11. Machine alimentée par diesel comprenant le dispositif de traitement d'échappement selon la revendication 9.
